# EUROPEAN PATENT SPECIFICATION

(11) **EP 3 502 038 B1**
(45) Date of publication and mention of the grant of the patent: **18.10.2023**
(21) Application number: 18210442.2
(22) Date of filing: 05.12.2018
(51) Int. Cl.: B66F 5/04, B66F 13/00, B60S 11/00, B66F 3/36, B60B 29/00

(54) **DETACHABLE SERVICE JACK ADAPTER FOR MOUNTING VEHICULAR SPINDLES**
ABNEHMBARER WAGENHEBERADAPTER ZUR MONTAGE VON FAHRZEUGACHSEN
ADAPTATEUR DE CONNECTEUR DE SERVICE DÉTACHABLE POUR LE MONTAGE DE TIGES POUSSOIRS DE VÉHICULES

(30) Priority: 20.12.2017 US 201762608228 P
(43) Date of publication of application: 26.06.2019
(73) Proprietor: Robert Bosch GmbH, 70442 Stuttgart (DE)
(72) Inventor: Kochie, Robert, Dodge Center, MN Minnesota 55927 (US); Lageson, Larry, Ellendale, MN Minnesota 56026 (US); Moraes, Marcelo, Burnsville, MN Minnesota 55337 (US)

(56) References cited:
- US-A- 4 239 196
- US-A- 4 540 147
- US-A- 4 549 722
- US-A- 4 607 823
- US-A- 5 127 638

## Description

### TECHNICAL FIELD

This disclosure relates to specialty tools for use in automotive repair services.

### BACKGROUND

Automotive spindles are used to operably attach a wheel assembly to the rest of the automobile, typically to the axle or suspension of the automobile. Corrosion, wear, and damage to the spindle may render a vehicle inoperable, and thus repair and maintenance of spindles can be a critical factor in the operating lifespan of an automotive vehicle.

Because spindles are typically bearing a heavy load of the vehicle in normal operation, repair and maintenance is often performed from underneath the vehicle. This position may be ergonomically undesirable, because it requires the technician to perform the tasks in a suboptimal position that may provide inconvenient access to tools or workbench functions. Alternatively, technicians may employ specialized tools to remove the spindle from the vehicle, but such tools are typically bulk and very expensive, and will often only be compatible with a small range of spindle configurations. In that regard, US 4,540,147 discloses a jack stand attachment, according to the preamble of claim 1, for use with a conventional support stand, the attachment having a socket means that is slidably received on the load rest of the support stand. On the upper surface of the socket means, there is found a V-shaped rest and link means are pivoted to the attachment which have apertures therein near the terminus thereof that will accept a wheel lug bolt. Further, US 4,607,823 discloses an apparatus for maintenancing the brake drum carried by the spindle of a wheel axle assembly, which reduces the time required to maintenance a brake drum and the likelihood that bearings and bearing seals in the brake drum will be damaged when the drum is removed from its spindle. From US 4,549,722 one knows an adapter composed of front and rear brackets adjustably mounted on a jack pad has an arcuate recess receiving and supporting the rear flange of a transmission or differential housing and a front bracket with an adjustable plate carrying opposed horizontal straps to be bolted to the front end of the differential or transmission housing and recessed to surround the front end. Finally, US 4,239,196 discloses an engine stand having a universal mounting apparatus for securing loads such as different sizes of automotive engines and the like to a rotatable face plate which has a wheeled stand therefor.

It is therefore desirable to provide an inexpensive, efficient tool that is operable to remove a spindle from a vehicle for repair or maintenance.

### SUMMARY

The invention is set out in the appended set of claims. One aspect of this disclosure is directed to a vehicular spindle frame as defined in claim 1.

Another aspect of this disclosure is directed to a vehicular jack having an adapter bracket detachably coupled thereto as defined in claim 6. Secure support of the vehicular spindle is accomplished using an adapter arm having a stud washer that is operable to interact with a variety of spindles having a variety of configurations.

A further embodiment is defined in claim 10 which comprises a bracket that is configured to be detachably mounted upon a vehicular jack, the bracket further operable to securely support an automotive spindle. Support for the automotive spindle is accomplished via a pair of adapter arms each having a spindle washer this is adjustable to be compatible with a variety of spindles having a variety of configurations. Detachable mounting to a vehicular jack is accomplished via a number of mounting bolts inserted through a number of mounting slots in a mounting surface of the bracket, the mounting slots operable to be compatible with a variety of vehicular jacks having a variety of mounting configurations.

The above aspects of this disclosure and other aspects will be explained in greater detail below with reference to the attached drawings.

### BRIEF DESCRIPTION OF THE DRAWINGS

Fig. 1 is an illustration of an adapter bracket configured to permit a vehicular jack to support an automotive spindle.
Fig. 2 is a diagrammatic illustration of a vehicular spindle secured to an adapter bracket.
Fig. 3 is an illustration of a vehicular jack mounted with an adapter bracket and operably supporting an automotive spindle.

### DETAILED DESCRIPTION

The illustrated embodiments are disclosed with reference to the drawings. However, it is to be understood that the disclosed embodiments are intended to be merely examples that may be embodied in various and alternative forms. The figures are not necessarily to scale and some features may be exaggerated or minimized to show details of particular components. The specific structural and functional details disclosed are not to be interpreted as limiting, but as a representative basis for teaching one skilled in the art how to practice the disclosed concepts.

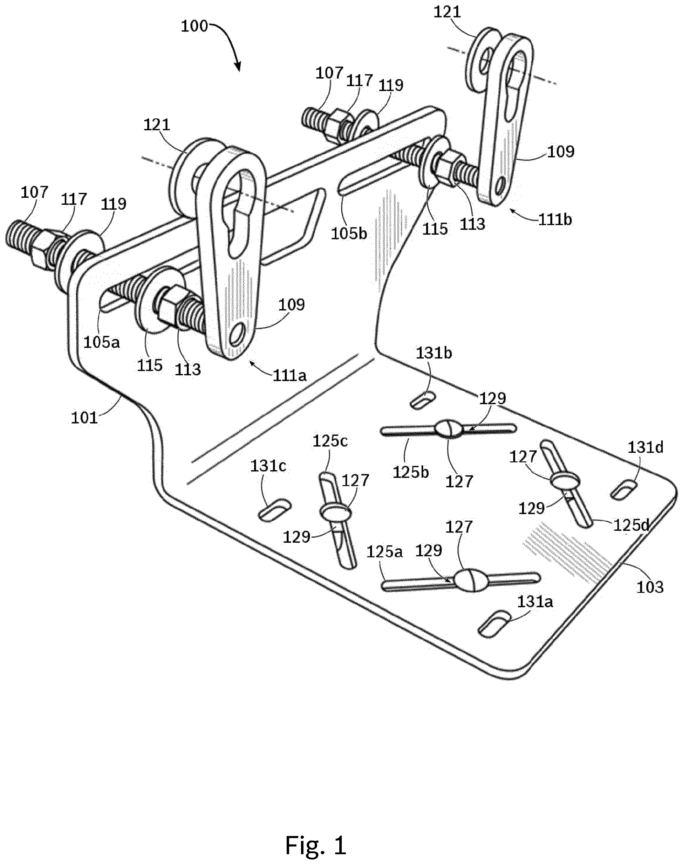

Fig. 1 is a depiction of an adapter bracket **100** suitable for mounting onto a vehicular jack that is operable to support a spindle of an automobile. Bracket **100** comprises an L-shape comprised of an interface surface **101** and a mounting surface **103.** Interface surface **101** and mounting surface **103** form a substantially perpendicular angle to form the L-shape of bracket **100.** Throughout this disclosure, "substantially perpendicular" refers to an angle that is 90-degrees within tolerances designated by manufacturing requirements or by factors known to one of ordinary skill in the art. In the depicted embodiment, the substantially perpendicular angle may be 90-degrees within a 10-degree tolerance. This exemplary tolerance is given by way of example and not limitation. Other embodiments may comprise other tolerances without deviating from the scope of the invention as defined by the appended claims.

Within interface surface **101** are a number of arm slots **105,** having a linearly-extended shape extending in a direction that is substantially parallel to the mounting surface **103.** Throughout this disclosure, "substantially parallel" refers to an angle that is 0-degrees within tolerances designated by manufacturing requirements or by factors known to one of ordinary skill in the art. In the depicted embodiment, the substantially parallel angle may be 0-degrees within a 10-degree tolerance. This exemplary tolerance is given by way of example and not limitation. Other embodiments may comprise other tolerances without deviating from the scope of the invention as defined by the appended claims.

In the depicted embodiment, a pair of arm slots **105** are each formed along the edge of interface surface **101** furthest from mounting surface **103,** but other embodiments may comprise a different number of arm slots **105,** or a different placement of arm slots **105** with respect to bracket **100** without deviating from the scope of the invention as defined by the appended claims.

Each of arm slots **105** is operable to receive an adapter arm **107.** Adapter arm **107** comprises a threaded cylindrical rod having a diameter sized such that the adapter arm **107** is inserted within an arm slot **105** without engaging the threads of the adapter arm **107.** A stud washer **109** is coupled to adapter arm **107** at the end closest to mounting plate **103** when adapter arm **107** is inserted into arm slot **105,** forming an arm assembly **111.** Stud washer **109** receives the stud of an automotive spindle. Stud washer **109** rotates about an axis defined by adapter arm **107.** Arm assembly **111** is displaced along the length of arm slot **105,** and may also be positioned within arm slot **105** along a direction substantially perpendicular to interface surface **101.** The adaptable position of arm assembly **111** permits stud washer **109** to receive a stud from a variety of spindles having a variety of configurations. According to the invention, stud washer **109** is configured such that it is operable to receive a variety of studs having different diameters and geometric designs.

The depicted embodiment comprises a pair of arm assemblies **111,** each having an adapter arm **107** and a stud washer **109,** but other embodiments may comprise a different number of arm assemblies **111** without deviating from the scope of the invention as defined by the appended claims.

Because an arm assembly **111** may be positioned freely within an arm slot **105,** a positioning nut **113** may engage adapter arm **105** between interface surface **101** and stud washer 109. Positioning nut **113** is positioned at a particular point along the linear length of adapter arm **105** to define the minimum distance between stud washer **109** and interface surface **101.** The desired minimum distance is determined by the specification of the spindle to be mounted upon the bracket **100.** A positioning washer **115** is utilized to distribute the load of positioning nut **113.**

Positioning nut **113** is operable to define a minimum distance between stud washer **109** and interface surface **101.** A locking nut **117** engages adapter arm **105** on the opposite side of interface surface **101** from positioning nut **113** to define a maximum distance between stud washer **109** and interface surface **101.** The desired maximum distance is determined by the specification of the spindle to be mounted upon the bracket **100.** A locking washer **119** is utilized to distribute the load of locking nut **117.**

Positioning nut **113** and locking nut **117** are utilized in tandem to set of position of arm assembly **111** with respect to interface surface **101** such that stud washer **109** is effectively at a fixed distance from interface surface **101.** The desired fixed distance from interface surface **101** is determined by the specification of the spindle to be mounted upon the bracket **100.** The utilization of the desired fixed distance is operable to create stable support for the spindle by bracket **100.** The stability of the support may further be optimized by utilizing lug nuts from the spindle (not shown) to couple the spindle to the bracket **100.** In the depicted embodiment, bracket **100** includes a lug washer **121** to distribute the load of a lug nut. The depicted embodiment comprises a pair of arm assemblies **111,** each having an associated positioning nut **113,** positioning washer **115,** locking nut **117,** locking washer **119,** and lug washer **121,** but other embodiments may comprise other configurations having a different number of each of these components without deviating from the scope of the invention as defined by the appended claims.

Mounting surface **103** comprises a mounting mechanism operable to couple bracket **100** to the seat of a vehicular jack. The mounting mechanism comprises a number of first mounting slots **125** having a linearly-extended shape and disposed at a substantially 45-degree angle with respect to the edges of mounting surface **103.** Throughout this disclosure, "substantially 45-degree" refers to an angle that is 45-degrees within tolerances designated by manufacturing requirements or by factors known to one of ordinary skill in the art. In the depicted embodiment, the substantially parallel angle is 0-degrees within a 10-degree tolerance. This exemplary tolerance is given by way of example and not limitation. Other embodiments may comprise other tolerances without deviating from the scope of the invention as defined by the appended claims.

In the depicted embodiment, the first mounting slots **125** are arranged in two substantially parallel pairs, each pair arranged such that its respective members are substantially perpendicular to the first mounting slots of the other pair. Other embodiments may comprise other configurations having a different number or a different arrangement of first mounting slots **125** without deviating from the scope of the invention as defined by the appended claims. Each of first mounting slots **125** is coupled to a mounting bolt **127,** and the arrangement of first mounting slots **125** advantageously provides a wide variety of placement of a mounting bolt **127** with respect to mounting surface **103.** The wide variety of placements for a mounting bolt **127** improves the compatibility of bracket **100** with a variety of vehicular jacks. In the depicted embodiment, mounting bolts **127** engage a mounting nut **129** disposed on the opposite side of mounting surface **103.** Some embodiments may not comprise mounting nuts **129,** and instead mounting bolts **127** may engage directly with threaded slots or nuts affixed to the seat of the associated vehicular jack. In the depicted embodiment, bracket **100** comprises a set of four mounting bolts **127** and four respective mounting nuts **129,** but other embodiments may comprise different numbers of mounting bolts **127** and respective mounting nuts **129.**

Mounting surface **103** further comprises a second set of mounting slots **131.** Second mounting slots **131** comprise oblong slots formed in mounting surface **103** that are sufficiently sized to receive a mounting bolt **127.** In the depicted embodiment, bracket **100** comprises four mounting bolts **127** to be inserted into any of the first mounting slots **125** or second mounting slots **131,** but other embodiments may comprise a different number of mounting bolts **127.** Second mounting slots **131** advantageously improve the compatibility of bracket **100** with a variety of vehicular jacks. Some embodiments may comprise only one of first mounting slots **125** and second mounting slots **131** without deviating from the scope of the invention as defined by the appended claims.

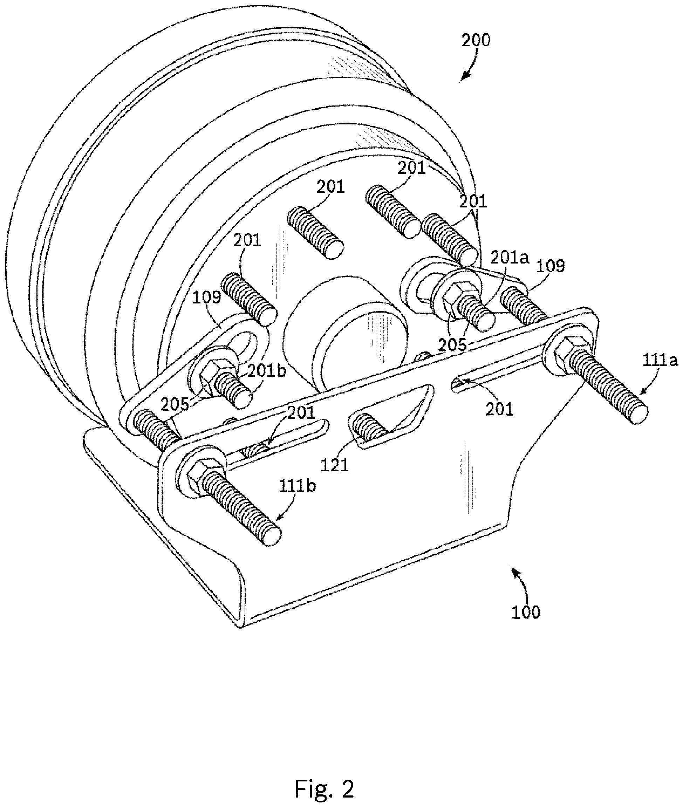

Fig. 2 is an illustration of bracket **100** when configured to support a spindle **200.** Spindle **200** comprises a number of functionally identical studs **201,** each of the studs disposed in a regular symmetrical pattern around the face of spindle **200.** The arm assemblies **111** of bracket **100** have been configured such that stud washers **109** have accepted one of studs **201,** and are secured with a lug nut **205.** In the depicted embodiment, a lug washer **121** may be utilized to distribute the load of its respective lug nut **205.** In the depicted embodiment, stud **201a** and stud **201b** are functionally identical to the rest of studs **201,** but are given special designation to illustrate that they have been received by one of stud washers **109.** Stud **201a** and stud **201b** are further distinguished in practice only by where they are disposed upon spindle **200.** Because spindle **200** exhibits substantial radial symmetry, the particular orientation of the studs **201** may only be relevant when one or more of studs **201** requires repair or maintenance.

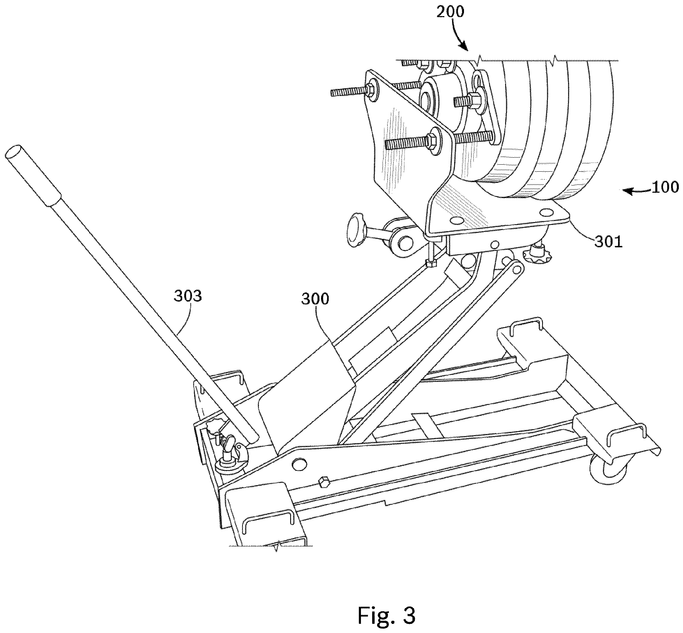

Fig. 3 is an illustration of a vehicular jack **300** having a seat **301** operable to lift the frame of a vehicle. Seat **301** may comprise an attachment mechanism to which bracket **100** may be detachably coupled using a mounting mechanism (see Fig. 1). In the depicted embodiment, vehicular jack **300** is depicted with a spindle **200** (see Fig. 2) already supported by the bracket **100,** however, embodiments wherein the vehicular jack **300** has been coupled to bracket **100** before supporting a spindle **200** do not deviate from the scope of the invention as defined by the appended claims.

In the depicted embodiment, vehicular jack **300** comprises a hydraulic lifting mechanism actuated by a lever **303,** but other embodiments may utilize any other known configuration of a vehicular jack **300** having a seat **301** without deviating from the scope of the invention as defined by the appended claims. The maximum load of the vehicular jack **300** may be specified by the vehicular requiring service without deviating from the scope of the invention as defined by the appended claims. In the depicted embodiment, the maximum load of the vehicular jack **300** and bracket **100** is 350 pounds (158,76 kg.), but other embodiments may comprise other configurations without deviating from the scope of the invention as defined by the appended claims.

In one embodiment, bracket **100** is detachably coupled to seat **301** of vehicular jack **300.** Advantageously, detachable coupling of bracket **100** provides for flexible utility of the vehicular jack **300** in situations wherein a spindle **200** requires service. The vehicular jack **300** first is used without the bracket **100** to raise the vehicle by the frame near the wheel requiring service. Once the vehicle has been lifted to an appropriate height, a vehicle stand (not shown) may be placed under the frame of the vehicle, and vehicular jack **300** may be removed from under the vehicle. Vehicular jack **300** may then be detachably coupled to bracket **100** such that it is operable to support a spindle **200** in need of repair. The wheel assembly of the associated spindle **200** is removed to expose the spindle **200.** Spindle **200** is supported by bracket **100** and vehicular jack **300,** permitting spindle **200** to be decoupled from the vehicle for repairs. Advantageously, the bracket **100** permits vehicular jack **300** to be operable to perform additional functions that may otherwise require expensive specialized tools. In this embodiment, service of spindle **200** is advantageously performed at a technician's work bench, with easy access to tools and better ergonomic conditions for the technician such as lighting and posture. After service is complete, the repaired spindle **200** is re-coupled to the vehicle, the wheel assembly of the associated spindle **200** is re-attached, bracket **100** is detached from seat **301,** and the vehicular jack **300** is replaced under the frame of the vehicle. Once vehicular jack **300** has been replaced under the frame of the vehicle and supporting the load of the vehicle, the vehicle stand is removed, and the vehicular jack **300** may be utilized to lower the vehicle to the supporting surface of the jack (e.g., the workshop floor or the ground).

## Claims

1. A vehicular spindle frame comprising:
a bracket (100) having a mounting surface (103) and an interface surface (101), the mounting surface (103) and the interface surface (101) forming a substantially perpendicular angle,
**characterised in that** the interface surface (101) has an arm-slot (105) and the mounting surface (103) comprises a mounting mechanism configured to mount the bracket (100) onto a service jack (300);
further **characterised in** comprising an adapter arm (107), the adapter arm (107) operable to be inserted through the arm-slot (105) and operable to be positioned within the arm-slot (105) along a direction substantially perpendicular to the interface surface (101);
a positioning nut (113) operable to engage the adapter arm (107) and operable to set a position of the adapter arm (107) in a direction substantially perpendicular to the interface surface (101) when the adapter arm (107) is inserted through the arm-slot (105); and
a stud washer (109) coupled to the adapter arm (107) such that the adapter arm (107) defines an axis about which the stud washer (109) may rotate, the stud washer (109) operable to receive a stud of a vehicular spindle (200) from a variety of studs having different diameters and geometric designs.

2. The vehicular spindle frame of claim 1, comprising a locking nut (117) operable to engage the adapter arm (107) and cooperate with the positioning nut to set a position of the adapter arm (107) relative to the interface surface (101).

3. The vehicular spindle frame of claim 1, wherein the stud washer (109) is operable to receive a variety of studs having a variety of configurations.

4. The vehicular spindle frame of claim 1, wherein the mounting mechanism comprises a mounting slot (125) and a mounting bolt (127) operable to be threaded through mounting slot (125).

5. The vehicular spindle frame of claim 1, wherein the number of mounting slots (125) comprises a number of linearly-extended slots (125) each arranged at a 45-degree angle with respect to the edges of the mounting surface (103).

6. A vehicular jack assembly comprising:
a lifting mechanism having a seat (301) and operable to provide an upward force upon the seat (301) in a direction away from a support surface; and
the vehicular spindle frame of claim 1,
with the bracket (100) formed angular and detachably coupled to the seat (301), wherein the interface surface (101) comprises a number of arm-slots (105) and wherein the angled bracket (100) is operable to support a vehicular wheel spindle (200);
the adapter arm (107) inserted through the arm-slot (105), and operable to be positioned within the arm-slot (105) along a direction substantially perpendicular to the interface surface (101);
and
a stud washer (109) coupled to the adapter arm (107) such that the adapter arm (107) defines an axis through the stud washer (109) about which the stud washer (109) may rotate, the stud washer (109) operable to receive a stud of a vehicular spindle (200).

7. The vehicular jack assembly of claim 6, wherein the lifting mechanism further comprises a hydraulic jack mechanism to provide the upward force to the seat (301).

8. The vehicular jack assembly of claim 7, wherein the hydraulic jack mechanism is operable to support the weight of a vehicular spindle (200).

9. The vehicular jack assembly of claim 7, wherein the hydraulic jack mechanism is operable to support a weight of 350 pounds (158,76 kg.)

10. The vehicular spindle frame of claim 1 comprising:
the bracket (100) formed as an L-bracket (100) having a mounting surface (103) and an interface surface (101), the mounting surface (103) and the interface surface (101) disposed in a substantially perpendicular angle;
the arm-slots (105) formed in a pair and disposed within the interface surface (101), the arm-slots (105) having a linearly-extended form and disposed symmetrically from the edges of the interface surface (101) in an orientation that is substantially parallel to the mounting surface (103);
of the adapter arms (107) formed in a pair, each of the adapter arms (107) inserted into one of the arm-slots (105), the adapter arms (107) operable to freely slide along the linear length of its respective arm-slot (105) and further operable to be positioned along a direction that is substantially perpendicular to the interface surface (101) and substantially parallel to the mounting surface (103);
the positioning nuts formed in a pair for each of the pair of adapter arms (107), the positioning nuts operable to engage an adapter arm (107) to set a position of the adapter arm (107) along the direction substantially perpendicular to the interface surface (101) when the adapter arm (107) is inserted into an arm-slot (105); and
the stud washers (109) formed in a pair, each stud washer (109) coupled to one of the adapter arms (107) such that the adapter arm (107) defines an axis about which the stud washer (109) may rotate, wherein each stud washer (109) is operable to receive a stud of a wheel spindle (200).

11. The vehicular spindle frame of claim 10, further comprising a pair of locking nuts (117), each locking nut (117) operable to engage an adapter arm (107) and cooperate with a respective positioning nut to set a position of the adapter arm (107) relative to the interface surface (101).

12. The vehicular spindle frame of claim 10, wherein the mounting surface (103) comprises a first set of mounting slots (125) having a linearly-extended shape and disposed within the mounting surface (103), each of the first set of mounting slots (125) oriented linearly in a direction substantially at a 45-degree angle to the interface surface (101), the first set of mounting slots (125) comprising a first pair of first mounting slots (125) disposed in a substantially parallel orientation and a second pair of first mounting slots (125) in a substantially parallel orientation that is substantially perpendicular to the orientation of the first pair of first mounting slots.

13. The vehicular spindle frame of claim 12, wherein the mounting surface (103) comprises a second set of mounting slots (131) disposed within the mounting surface (103), each of the second set of mounting slots (131) comprising an oblong shape oriented such that it is substantially parallel to the interface surface (101) and substantially at a 45-degree to the orientation of each of the first set of mounting slots (125), each of the second set of mounting slots (131) disposed between at least one edge of the first mounting surface (103) and one of the first set of mounting slots (125).

## Patentansprüche

1. Fahrzeugachsenrahmen, der Folgendes umfasst:
eine Halterung (100) mit einer Montageoberfläche (103) und einer Zwischenoberfläche (101), wobei die Montageoberfläche (103) und die Zwischenoberfläche (101) einen im Wesentlichen rechten Winkel bilden, **dadurch gekennzeichnet, dass** die Zwischenoberfläche (101) einen Armschlitz (105) aufweist und die Montageoberfläche (103) einen Montagemechanismus umfasst, der ausgelegt ist zum Montieren der Halterung (100) auf einen Wagenheber (300);
ferner **dadurch gekennzeichnet, dass** er Folgendes umfasst
einen Adapterarm (107), wobei der Adapterarm (107) dazu betreibbar ist, durch den Armschlitz (105) eingeführt zu werden, und dazu betreibbar ist, innerhalb des Armschlitzes (105) entlang einer Richtung positioniert zu werden, die im Wesentlichen senkrecht zur Zwischenoberfläche (101) ist;
eine Positionierungsmutter (113), die dazu betreibbar ist, in Eingriff mit dem Adapterarm (107) zu kommen, und dazu betreibbar ist, eine Position des Adapterarms (107) in einer Richtung festzulegen, die im Wesentlichen senkrecht zu der Zwischenoberfläche (101) ist, wenn der Adapterarm (107) durch den Armschlitz (105) eingeführt wird; und
eine Bolzenbeilagscheibe (109), die mit dem Adapterarm (107) gekoppelt ist, sodass der Adapterarm (107) eine Achse definiert, um die sich die Bolzenbeilagscheibe (109) drehen kann, wobei die Bolzenbeilagscheibe (109) dazu betreibbar ist, einen Bolzen einer Fahrzeugachse (200) aus einer Vielzahl von Bolzen mit unterschiedlichen Durchmessern und geometrischen Ausgestaltungen aufzunehmen.

2. Fahrzeugachsenrahmen nach Anspruch 1, umfassend eine Sicherungsmutter (117), die dazu betreibbar ist, in Eingriff mit dem Adapterarm (107) zu kommen und mit der Positionierungsmutter zusammenzuwirken, um eine Position des Adapterarms (107) bezüglich der Zwischenoberfläche (101) einzustellen.

3. Fahrzeugachsenrahmen nach Anspruch 1, wobei die Bolzenbeilagscheibe (109) dazu betreibbar ist, eine Vielzahl von Bolzen mit einer Vielzahl von Konfigurationen aufzunehmen.

4. Fahrzeugachsenrahmen nach Anspruch 1, wobei der Montagemechanismus einen Montageschlitz (125) und eine Montageschraube (127), die dazu betreibbar ist, durch den Montageschlitz (125) eingeschraubt zu werden, umfasst.

5. Fahrzeugachsenrahmen nach Anspruch 1, wobei die Anzahl von Montageschlitzen (125) eine Anzahl von linear ausgedehnten Schlitzen (125) umfasst, die jeweils in einem 45-Grad-Winkel bezüglich der Kanten der Montageoberfläche (103) angeordnet sind.

6. Fahrzeugheberanordnung, die Folgendes umfasst:
einen Hebemechanismus, der einen Sitz (301) aufweist und dazu betreibbar ist, eine nach oben gerichtete Kraft auf den Sitz (301) in eine Richtung weg von der Stützoberfläche zu wirken; und
den Fahrzeugachsenrahmen nach Anspruch 1,
wobei die Halterung (100) angewinkelt gebildet ist und abnehmbar mit dem Sitz (301) gekoppelt ist, wobei die Zwischenoberfläche (101) eine Anzahl von Armschlitzen (105) umfasst und wobei die angewinkelte Halterung (100) dazu betreibbar ist, eine Fahrzeugradachse (200) zu stützen;
wobei der Adapterarm (107) durch den Armschlitz (105) eingeführt wird und dazu betreibbar ist, innerhalb des Armschlitzes (105) entlang einer Richtung positioniert zu werden, die im Wesentlichen senkrecht zur Zwischenoberfläche (101) ist; und
eine Bolzenbeilagscheibe (109), die mit dem Adapterarm (107) gekoppelt ist, sodass der Adapterarm (107) eine Achse durch die Bolzenbeilagscheibe (109) definiert, um die sich die Bolzenbeilagscheibe (109) drehen kann, wobei die Bolzenbeilagscheibe (109) dazu betreibbar ist, einen Bolzen einer Fahrzeugachse (200) aufzunehmen.

7. Fahrzeugheberanordnung nach Anspruch 6, wobei der Hebemechanismus ferner einen hydraulischen Wagenhebermechanismus zum Wirken der nach oben gerichteten Kraft auf den Sitz (301) umfasst.

8. Fahrzeugheberanordnung nach Anspruch 7, wobei der hydraulische Wagenhebermechanismus dazu betreibbar ist, das Gewicht einer Fahrzeugachse (200) zu stützen.

9. Fahrzeugheberanordnung nach Anspruch 7, wobei der hydraulische Wagenhebermechanismus dazu betreibbar ist, ein Gewicht von 350 pounds (158,76 kg) zu stützen.

10. Fahrzeugachsenrahmen nach Anspruch 1, der Folgendes umfasst:
die Halterung (100), die als eine L-Halterung (100) ausgebildet ist, die eine Montageoberfläche (103) und eine Zwischenoberfläche (101) aufweist, wobei die Montageoberfläche (103) und die Zwischenoberfläche (101) in einem im Wesentlichen rechten Winkel angeordnet sind;
wobei die Armschlitze (105) paarweise gebildet sind und innerhalb der Zwischenoberfläche (101) angeordnet sind, wobei die Armschlitze (105) eine linear ausgedehnte Form aufweisen und symmetrisch von den Kanten der Zwischenoberfläche (101) in einer Ausrichtung angeordnet sind, die im Wesentlichen parallel zur Montageoberfläche (103) ist;
wobei, von den paarweise gebildeten Adapterarmen (107), jeder der Adapterarme (107) in einen der Armschlitze (105) eingeführt wird, wobei die Adapterarme (107) dazu betreibbar sind, entlang der linearen Länge ihres jeweiligen Armschlitzes (105) frei zu gleiten und ferner dazu betreibbar sind, entlang einer Richtung positioniert zu werden, die im Wesentlichen senkrecht zur Zwischenoberfläche (101) und im Wesentlichen parallel zur Montageoberfläche (103) ist;
wobei die Positionierungsmuttern für jedes der Paare von Adapterarmen (107) paarweise gebildet sind, wobei die Positionierungsmuttern dazu betreibbar sind, in Eingriff mit einem Adapterarm (107) zu kommen, um eine Position des Adapterarms (107) entlang der Richtung im Wesentlichen senkrecht zur Zwischenoberfläche (101) einzustellen, wenn der Adapterarm (107) in einen Armschlitz (105) eingeführt wird; und
wobei die Bolzenbeilagscheiben (109) paarweise gebildet sind, wobei jede Bolzenbeilagscheibe (109) mit einem der Adapterarme (107) gekoppelt ist, sodass der Adapterarm (107) eine Achse definiert, um die sich die Bolzenbeilagscheibe (109) drehen kann, wobei jede Bolzenbeilagscheibe (109) dazu betreibbar ist, einen Bolzen einer Radachse (200) aufzunehmen.

11. Fahrzeugachsenrahmen nach Anspruch 10, ferner umfassend ein Paar Sicherungsmuttern (117), wobei jede Sicherungsmutter (117) dazu betreibbar ist, in Eingriff mit einem Adapterarm (107) zu kommen und mit einer jeweiligen Positionierungsmutter zusammenzuwirken, um eine Position des Adapterarms (107) bezüglich der Zwischenoberfläche (101) einzustellen.

12. Fahrzeugachsenrahmen nach Anspruch 10, wobei die Montageoberfläche (103) eine erste Menge von Montageschlitzen (125) umfasst, die eine linear ausgedehnte Form aufweisen und innerhalb der Montageoberfläche (103) angeordnet sind, wobei jeder der ersten Menge von Montageschlitzen (125) linear in eine Richtung im Wesentlichen in einem 45-Grad-Winkel zur Zwischenoberfläche (101) ausgerichtet ist, wobei die erste Menge von Montageschlitzen (125) ein erstes Paar von ersten Montageschlitzen (125), die in einer im Wesentlichen parallelen Ausrichtung angeordnet sind, und ein zweites Paar von ersten Montageschlitzen (125) in einer im Wesentlichen parallelen Ausrichtung, die im Wesentlichen senkrecht zur Ausrichtung des ersten Paares von ersten Montageschlitzen ist, umfasst.

13. Fahrzeugachsenrahmen nach Anspruch 12, wobei die Montageoberfläche (103) eine zweite Menge von Montageschlitzen (131) umfasst, die innerhalb der Montageoberfläche (103) angeordnet sind, wobei jeder aus der zweiten Menge von Montageschlitzen (131) eine längliche Form umfasst, die so ausgerichtet ist, dass sie im Wesentlichen parallel zur Zwischenoberfläche (101) und im Wesentlichen in einem 45-Grad-Winkel zur Ausrichtung jedes der ersten Menge von Montageschlitzen (125) ist, wobei jeder der zweiten Menge von Montageschlitzen (131) zwischen zumindest einer Kante der ersten Montageoberfläche (103) und einem der ersten Menge von Montageschlitzen (125) angeordnet ist.

## Revendications

1. Cadre de fusée de véhicule comprenant :
un support (100) ayant une surface de montage (103) et une surface d'interface (101), la surface de montage (103) et la surface d'interface (101) formant un angle sensiblement perpendiculaire,
**caractérisé en ce que** la surface d'interface (101) a une fente de bras (105) et la surface de montage (103) comprend un mécanisme de montage conçu pour monter le support (100) sur un cric de levage de service (300) ;
caractérisé en outre ce qu'il comprend
un bras adaptateur (107), le bras adaptateur (107) pouvant être inséré dans la fente de bras (105) et pouvant être positionné dans la fente de bras (105) le long d'une direction sensiblement perpendiculaire à la surface d'interface (101) ;
un écrou de positionnement (113) pouvant venir en prise avec le bras adaptateur (107) et pouvant définir une position du bras adaptateur (107) dans une direction sensiblement perpendiculaire à la surface d'interface (101) lorsque le bras adaptateur (107) est inséré dans la fente de bras (105) ; et
une rondelle de goujon (109) accouplée au bras adaptateur (107) de sorte que le bras adaptateur (107) définisse un axe autour duquel la rondelle de goujon (109) peut tourner, la rondelle de goujon (109) pouvant recevoir un goujon d'une fusée de véhicule (200) à partir d'une variété de goujons ayant différents diamètres et conceptions géométriques.

2. Cadre de fusée de véhicule selon la revendication 1, comprenant un écrou de blocage (117) pouvant venir en prise avec le bras adaptateur (107) et coopérer avec l'écrou de positionnement pour définir une position du bras adaptateur (107) par rapport à la surface d'interface (101).

3. Cadre de fusée de véhicule selon la revendication 1, la rondelle de goujon (109) pouvant recevoir une variété de goujons ayant une variété de configurations.

4. Cadre de fusée de véhicule selon la revendication 1, le mécanisme de montage comprenant une fente de montage (125) et un boulon de montage (127) pouvant être fileté à travers la fente de montage (125).

5. Cadre de fusée de véhicule selon la revendication 1, le nombre de fentes de montage (125) comprenant un certain nombre de fentes étendues linéairement (125) chacune disposée à un angle de 45 degrés par rapport aux bords de la surface de montage (103).

6. Ensemble cric de levage de véhicule comprenant :
un mécanisme de levage ayant un siège (301) et pouvant fournir une force ascendante sur le siège (301) dans une direction opposée à une surface de support ; et
le cadre de fusée selon la revendication 1,
le support (100) étant angulaire et accouplé de manière amovible au siège (301), la surface d'interface (101) comprenant un certain nombre de fentes de bras (105) et le support angulaire (100) pouvant supporter une fusée de roue de véhicule (200) ;
le bras adaptateur (107) inséré dans la fente de bras (105) et pouvant être positionné dans la fente de bras (105) le long d'une direction sensiblement perpendiculaire à la surface d'interface (101) ;
et
une rondelle de goujon (109) accouplée au bras adaptateur (107) de sorte que le bras adaptateur (107) définisse un axe à travers la rondelle de goujon (109) autour duquel la rondelle de goujon (109) peut tourner, la rondelle de goujon (109) pouvant recevoir un goujon d'une fusée de véhicule (200).

7. Ensemble cric de levage de véhicule selon la revendication 6, le mécanisme de levage comprenant en outre un mécanisme de cric hydraulique pour fournir la force ascendante au siège (301).

8. Ensemble cric de levage de véhicule selon la revendication 7, le mécanisme de cric hydraulique pouvant supporter le poids d'une fusée de véhicule (200) .

9. Ensemble cric de levage de véhicule selon la revendication 7, le mécanisme de cric hydraulique pouvant supporter un poids de 350 livres (158,76 kg).

10. Cadre de fusée de véhicule selon la revendication 1 comprenant :
le support (100) formé comme un support en L (100) ayant une surface de montage (103) et une surface d'interface (101), la surface de montage (103) et la surface d'interface (101) étant disposées dans un angle sensiblement perpendiculaire ;
les fentes de bras (105) formées en paire et disposées à l'intérieur de la surface d'interface (101), les fentes de bras (105) ayant une forme linéairement étendue et disposées symétriquement à partir des bords de la surface d'interface (101) dans une orientation qui est sensiblement parallèle à la surface de montage (103) ;
parmi les bras adaptateurs (107) formant une paire, chacun des bras adaptateurs (107) inséré dans l'une des fentes de bras (105), les bras adaptateurs (107) pouvant coulisser librement sur la longueur linéaire de leur fente de bras (105) respective et pouvant en outre être positionnés le long d'une direction sensiblement perpendiculaire à la surface d'interface (101) et sensiblement parallèle à la surface de montage (103) ;
les écrous de positionnement formant en une paire pour chacune des paires de bras adaptateur (107), les écrous de positionnement pouvant venir en prise avec un bras adaptateur (107) pour définir une position du bras adaptateur (107) le long de la direction sensiblement perpendiculaire à la surface d'interface (101) lorsque le bras adaptateur (107) est inséré dans une fente de bras (105) ; et
les rondelles de goujon (109) formant une paire, chaque rondelle de goujon (109) étant accouplée à l'un des bras adaptateurs (107) de sorte que le bras adaptateur (107) définisse un axe autour duquel la rondelle de goujon (109) peut tourner, chaque rondelle de goujon (109) pouvant recevoir un goujon d'une fusée de roue (200).

11. Cadre de fusée de véhicule selon la revendication 10, comprenant en outre une paire d'écrous de verrouillage (117), chaque écrou de verrouillage (117) pouvant venir en prise avec un bras adaptateur (107) et coopérer avec un écrou de positionnement respectif pour définir une position du bras adaptateur (107) par rapport à la surface d'interface (101).

12. Cadre de fusée de véhicule selon la revendication 10, la surface de montage (103) comprenant un premier ensemble de fentes de montage (125) ayant une forme linéairement étendue et disposées à l'intérieur de la surface de montage (103), chacune du premier ensemble de fentes de montage (125) étant orientée linéairement dans une direction sensiblement à un angle de 45 degrés par rapport à la surface d'interface (101), le premier ensemble de fentes de montage (125) comprenant une première paire de premières fentes de montage (125) disposées dans une orientation sensiblement parallèle et une seconde paire de premières fentes de montage (125) dans une orientation sensiblement parallèle qui est sensiblement perpendiculaire à l'orientation de la première paire de premières fentes de montage.

13. Cadre de fusée de véhicule selon la revendication 12, la surface de montage (103) comprenant un second ensemble de fentes de montage (131) disposées à l'intérieur de la surface de montage (103), chacune du second ensemble de fentes de montage (131) comprenant une forme oblongue orientée de sorte qu'elle soit sensiblement parallèle à la surface d'interface (101) et sensiblement à un angle de 45 degrés par rapport à l'orientation de chacune du premier ensemble de fentes de montage (125), chacune du second ensemble de fentes de montage (131) étant disposée entre au moins un bord de la première surface de montage (103) et l'une du premier ensemble de fentes de montage (125).
